(19) **Europäisches Patentamt**

**European Patent Office**

**Office européen des brevets**

(11) **EP 1 002 578 A2**

(12) **EUROPÄISCHE PATENTANMELDUNG**

(43) Veröffentlichungstag:
24.05.2000 Patentblatt 2000/21

(51) Int. Cl.[7]: **B01J 35/00**, C11C 3/12

(21) Anmeldenummer: **99120450.4**

(22) Anmeldetag: **14.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.11.1998 DE 19853123**

(71) Anmelder:
**Degussa-Hüls Aktiengesellschaft**
**60287 Frankfurt am Main (DE)**

(72) Erfinder:
- **Tacke, Thomas, Dr.**
  **42001 Paducah, KY (US)**
- **Beul, Inge**
  **63584 Gründau (DE)**
- **Freund, Andreas, Dr.**
  **10606-2228 White Plains,NY (US)**
- **Auer, Emmanuel, Dr.**
  **60528 Frankfurt (DE)**
- **Panster, Peter, Dr.**
  **63517 Rodenbach (DE)**
- **Ohmer, Johannes, Dr.**
  **63584 Gründau-Rothenbergen (DE)**

(54) **Verfahren zur selektiven katalytischen Hydrierung von Fettsäuren**

(57) Fettsäure und/oder Fettsäure-Verbindungen werden katalytisch selektiv hydriert, indem man als Katalysator Edelmetall-Kolloide verwendet.

**EP 1 002 578 A2**

**Beschreibung**

Die Erfindung betrifft ein Verfahren zur selektiven katalytischen Hydrierung von Fettsäuren, insbesondere von Fetten, Ölen, Fettsäureestern und freien Fettsäuren, in dem Katalysatoren auf Basis von Edelmetall-Kolloiden und geträgerte Katalysatoren auf Basis von Edelmetall-Kolloiden eingesetzt werden.

Nachwachsende Fette oder Öle tierischer oder pflanzlicher Herkunft gehören zu den Triglyceriden. Sie bilden einen wesentlichen Bestandteil der menschlichen Ernährung. Freie Fettsäuren können durch Spaltung der Triglyceride in Fettsäuren und Glycerin gewonnen werden. Die Fettsäuren aus pflanzlichen oder tierischen Quellen haben Kettenlängen von 12 bis 30 Kohlenstoffatomen. Es handelt sich zumeist um ungesättigte Fettsäuren mit bis zu drei Kohlenstoff-Kohlenstoff Doppelbindungen. Die Doppelbindungen, insbesondere in dreifach ungesättigten Fettsäuren, sind der Grund für die geringe thermische Stabilität und leichte Oxidierbarkeit der ungesättigten Fettsäuren.

Mehrfach ungesättigte Fette oder Öle sind für die menschliche Ernährung besonders wichtig. Zur Verbesserung der Lagerstabilität und zur Verbesserung der Handhabbarkeit dieser Fette ist es oft notwendig, die Kohlenstoff-Kohlenstoff-Doppelbindungen der mehrfach ungesättigten Fettsäuren selektiv bis auf eine Doppelbindung zu hydrieren. Man spricht dann von selektiver Hydrierung. Da gleichzeitig der Schmelzpunkt der hydrierten Produkte steigt, wird dieses Verfahren auch als Härtung bezeichnet.

Natürliche Fette oder Öle liegen fast vollständig in der cis-isomeren Form vor . Trans-Isomere Fette oder Öle stehen in Verdacht, zusammen mit den durchgehärteten Fetten den Triglyceridspiegel bzw. Cholesterinspiegel des menschlichen Blutes zu erhöhen. Ziel der selektiven Hydrierung von Fetten oder Ölen ist es deshalb, die Bildung von trans-Isomeren sowie die Bildung vollständig durchgehärteter Fette zu vermeiden.

Der Sättigungsgrad von Fetten und Ölen, Fettsäureestern und freien Fettsäuren, d. h. ihr Gehalt an noch verbliebenen Doppelbindungen, kann durch die Jodzahl bestimmt werden (Wijs-Methode, Tg1-64 der A. O. C. S.). Natürliche Fette weisen je nach dem Grad der Sättigung Jodzahlen zwischen 150 (Sojaöl) und 50 (Rindertalg) auf.

Es ist bekannt, die katalytische Härtung von Fettstoffen sowohl mit heterogenen als auch mit homogenen Katalysatoren durchzuführen. Bekannt ist die heterogene Katalyse mit Nickelkatalysatoren, wobei diese in Form von feinverteiltem Nickel entweder direkt oder aufgebracht auf Siliziumdioxid oder Kieselgur als Träger verwendet werden.

Nickelkatalysatoren sind, insbesondere in Hinsicht auf Reaktivität und Selektivität, nicht immer optimal. Probleme kann es durch die Bildung von Nickelseifen sowie durch Verunreinigungen im Ausgangsprodukt geben (Fat. Sci. Technol., 95. Jahrgang, Nr. 1, 1993, Seiten 2 bis 12).

Es ist bekannt, neben Nickelkatalysatoren auch Edelmetall-Trägerkatalysatoren sowohl für die selektive als auch für die vollständige Hydrierung von Fetten, Fettsäuren und Fettsäureestern einzusetzen (DE-OS 2 310 985, kanadisches Patent 1 157 844, EP 0 505 863 B1, EP 0632 747 B1).

Bekannt sind weiterhin homogene Metallkatalysatoren, wie Katalysatoren auf Basis der Metalle Chrom, Eisen, Cobalt, Nickel, Kupfer, Ruthenium, Rhodium, Iridium, Palladium und Platin, sowie solvensstabilisierte Palladium-Kolloid-Katalysatoren (Pd-SSK). Als Lösungsmittel werden Amide, wie z. B. Dimethylformamid, oder Propylencarbonat, eingesetzt. Je nach Härtungsgrad, Zeitdauer der Hydrierung und eingesetztem Lösungsmittel konnten cis/trans-Gehalte auf Basis der Monoensäure von 46/54 bis 93/7 erzielt werden (Fat. Sci. Technol., 95. Jahrgang, Nr. 1, 1993 Seiten 2 bis 12).

Von Nachteil bei der Anwendung dieser Katalysatoren ist jedoch der Einsatz von Lösungsmitteln. Nach der Hydrierung muß die Fettphase sowohl von der Lösungsmittel- als auch Katalysatorphase vollständig getrennt werden. Dabei sind Verluste an Katalysator und eingesetztem Lösungsmittel möglich.

Die bekannten Verfahren haben den Nachteil, daß sie nicht ausreichend selektiv sind und so zu einer unerwünschten Bildung von trans-Isomeren führen. Weiterhin kann die vollständige Abtrennung der Ni-Katalysatoren von der Fettphase nicht durchgeführt werden.

Aufgabe der vorliegenden Erfindung ist es, ein Verfahren zur selektiven katalytischen Hydrierung von Fettsäuren und/oder Fettsäureverbindungen, wie Fette, Öle, und/oder Fettsäureester zu entwickeln, das diese Nachteile nicht aufweist.

Gegenstand der Erfindung ist ein Verfahren zur selektiven katalytischen Hydrierung von Fettsäuren und/oder Fettsäure-Verbindungen, wie Fette, Öle und/oder Fettsäureester, welches dadurch gekennzeichnet ist, daß man als Katalysator Edelmetall-Kolloide verwendet.

Die Edelmetall-Kolloide können per se in Form einer homogenen Katalyse und/oder auf einem Träger aufgebracht in Form einer heterogenen Katalyse eingesetzt werden.

Edelmetall-Kolloide sind bekannte Stoffe. Sie werden beschrieben in verschiedenen Dokumenten (EP-A 423 627; DE-A 44 43 705; WO 96/17685).

In einer Ausführungsform der Erfindung kann man tensidstabilisierte mono-, bi- oder multimetallische Kolloide von Metallen oder deren Lösungen als Katalysator (Homogen-Katalysator) oder geträgerte Katalysatoren (Heterogen-Katalysator), die unter Verwendung von vorgeformten, tensidstabilisierten mono-, bi- oder multimetallischen Kolloiden von Metallen oder aus deren Lösungen hergestellt werden, einsetzen.

In einer Ausführungsform der Erfindung kann man mono-, bi- oder multimetallische Kolloide von Metallen aus den Gruppen VIII und IB des Periodensystems einsetzen.

In einer Ausführungsform der Erfindung kann man als Träger für die zur Hydrierung eingesetzten Katalysatoren Kohlenstoffträger, Oxide eines oder mehrerer Metalle der Gruppen IIA bis VA sowie IB bis VIIB und VIII des Periodensystems, Carbonate, Sulfate, Zeolithe, organofunktionelle Polysiloxane oder Ionenaustauscherharze in Form von Pulvern oder geformten Körpern verwenden.

In einer Ausführungsform der Erfindung kann man als Homogen-Katalysator mono-, bi- oder multimetallische Kolloide einsetzen, wobei zu deren Herstellung die entsprechenden Metallsalze in Gegenwart von stark hydrophilen Tensiden aus der Reihe der amphiphilen Betaine, kationische Tenside, Fettalkohol-Polyglykolether, Polyoxyethylen-Kohlenhydrat-Fettalkylester und/oder anionische Tenside und/oder amphiphile Zuckertenside in Tetrahydrofuran, Alkoholen oder direkt in Wasser mit chemischen Reduktionsmitteln, wie Hydriden, Wasserstoff oder Alkaliformiat, zwischen 0 und 100°C umgesetzt und anschließend isoliert werden.

In einer Ausführungsform der Erfindung kann man Trägerkatalysatoren einsetzen, die durch Einsatz mono-, bi- oder multimetallischer Kolloide hergestellt werden, wobei zu deren Herstellung die entsprechenden Metallsalze in Gegenwart von stark hydrophilen Tensiden aus der Reihe der amphiphilen Betaine, kationische Tenside, Fettalkohol-Polyglykolether, Polyoxyethylen-Kohlenhydrat-Fettalkylester und/oder anionische Tenside und/oder amphiphile Zuckertenside in Tetrahydrofuran, Alkoholen oder direkt in Wasser mit chemischen Reduktionsmitteln, wie Hydriden, Wasserstoff oder Alkaliformiat, zwischen 0 und 100°C umgesetzt und anschließend isoliert werden.

In einer Ausführungsform der Erfindung kann man als Homogen-Katalysator mono-, bi- oder multimetallische Kolloide einsetzen, die durch Einsatz mono-, bi- oder multimetallischer Kolloide hergestellt werden, die als hochdisperse, mikrokristalline Metalle oder Legierungen in Form von Pulvern oder Kolloiden durch Reduktion ihrer Metallsalze mit Metallhydriden der 1. und 2. Hauptgruppe des Periodensystems (z.B. Tetraalkylammoniumtriorganohydroboraten) ohne Anwendung von Wasserstoff in Gegenwart stabilisierender Komplexbildner (z.B. Tetraalylammoniumsalzen) gemäß der EP 423 627 B1 nach Abtrennung (z.B. Filtration) erhalten werden können und sich in inerten, organischen Lösungsmitteln, wie Tetrahydrofuran, Diglyme oder Kohlenwasserstoffen, redispergieren lassen.

In einer Ausführungsform der Erfindung kann man Trägerkatalysatoren einsetzen, die durch Einsatz mono-, bi- oder multimetallischer Kolloide hergestellt werden, die als hochdisperse, mikrokristalline Metalle oder Legierungen in Form von Pulvern oder Kolloiden durch Reduktion ihrer Metallsalze mit Metallhydriden der 1. und 2. Hauptgruppe des Periodensystems (z.B. Tetraalkylammoniumtriorganohydroboraten) ohne Anwendung von Wasserstoff in Gegenwart stabilisierender Komplexbildner (z.B. Tetraalylammoniumsalzen) gemäß der EP 423 627 B1 nach Abtrennung (z.B. Filtration) erhalten werden können und sich in inerten, organischen Lösungsmitteln, wie Tetrahydrofuran, Diglyme oder Kohlenwasserstoffen, redispergieren lassen.

In einer Ausführungsform der Erfindung kann man die Hydrierung mit Homogen-Katalysatoren oder mit pulverförmigen Katalysatoren in Rührreaktoren oder in Schleifenreaktoren durchführen.

In einer Ausführungsform der Erfindung kann man die Hydrierung mit stückigen Trägerkatalysatoren in Festbettreaktoren oder Rohrbündelreaktoren durchführen.

In einer Ausführungsform der Erfindung kann man die Hydrierung bei einem Gesamtdruck von bis zu 800 bar durchführen.

In einer Ausführungsform der Erfindung kann man die Hydrierung bei einem Wasserstoffdruck bzw. Wasserstoffpartialdruck von bis zu 800 bar durchführen.

In einer Ausführungsform der Erfindung kann man die Hydrierung in überkritischen Fluiden nach US-A 5,734,070 durchführen.

Eine mögliche Herstellung der vorgeformten, tensidstabilisierten Metall-Kolloide und/oder Legierungskolloide wird in der EP 423 627 B1 und in der DE 44 43 705 A1 beschrieben. Gemäß den Dokumenten werden sie als hochdisperse, mikrokristalline Metalle oder Legierungen in Form von Pulvern oder Kolloiden durch Reduktion ihrer Metallsalze mit Metallhydriden der 1. und 2. Hauptgruppe des Periodensystems in Gegenwart stabilisierender Komplexbildner erhalten. Die Kolloide sind löslich in einer Reihe geeigneter organischer Lösungsmittel, wie z.B. Toluol oder Tetrahydrofuran.

Gemäß der EP 423 627 B1 werden zur Herstellung von Metall-Kolloiden und/oder Legierungskolloiden Salze der entsprechenden Metalle einzeln oder als Mischung mit Tetraalkylammoniumtriorganohydroboraten ohne Anwendung von Wasserstoff in Tetrahydrofuran (THF) umgesetzt. Die gebildeten Metall-Kolloide bzw. Legierungskolloide können durch Filtration von der Reaktionslösung abgetrennt werden und lassen sich sehr leicht in inerten, organischen Lösungsmitteln, wie Tetrahydrofuran, Diglyme oder Kohlenwasserstoffen, redispergieren.

Bevorzugt können Edelmetall-Kolloide, die gemäß der DE-A 44 43 705 hergestellt werden, eingesetzt werden.

Die DB 44 43 705 A1 beschreibt die Herstellung von wasserlöslichen, tensidstabilisierten pulverförmigen mono- und bimetallischen Nanopartikeln. Hierzu werden die entsprechenden Metallsalze in Gegenwart von stark hydrophilen Tensiden aus der Reihe der amphiphilen Betaine, kationische Tenside, Fettalkohol-Polyglykolether, Polyoxyethylen-Kohlenhydrat-Fettalkylester und/oder anionische Tenside und/oder amphiphile Zuckertenside in Tetrahydrofuran, Alkoholen oder direkt in Wasser mit chemischen Reduktionsmitteln, wie Hydriden, Wasserstoff oder Alkaliformiat, bei Temperaturen zwischen 0 und 100°C umgesetzt und anschließend isoliert. Die so erhaltenen Metall- bzw. Legierungskolloide sind wasserlöslich.

Als Betaine eignen sich zum Beispiel (Trialkylammonio)alkylsulfonate, Alkyl-N,N-dimethyl-N-carboxymethyl-ammoniumbetain und Alkylamidopropylbetaine. Insbesondere 3-(N,N-Dimethyldodecylammonio)-propansulfonat (Sulfobetain 12$^{®}$), Lauryl-N,N-dimethyl-N-carboxymethyl-ammoniumbetain (Rewoteric AM DML$^{®}$) oder Cocoamidopropylbetain haben sich als vorteilhaft erwiesen.

Als kationische Tenside können (Chlorhydroxypropyl)alkyldimethylammoniumsalze, insbesondere Quab 360$^{®}$, Quab 342$^{®}$ oder Quab$^{®}$ 426 (Markenzeichen der Degussa) eingesetzt werden. Als Fettalkohol-polyglykolether eignet sich beispielsweise Polyoxyethlylenlaurylether. Ein bevorzugter Polyoxyethylen-Kohlenhydrat-Fettalkylester ist das entsprechende Sorbitanmonolaurat. Ein Beispiel für anionische Tenside ist das Natrium-Cocoamidoethyl-N-hydroxiethylglycinat. Als amphiphile Zuckertenside kann auch die Klasse der Alkylpolyglykoside zur Stabilisierung der Metall-Kolloide eingesetzt werden.

Die Fixierung der Metall-Kolloide auf Trägermaterialien kann durch Imprägnieren mit Hilfe vorgeformter, tensidstabilisierter Metall-Kolloide entsprechend der EP 0 715 889 A2 erfolgen. Die Metall-Kolloide fallen bei der Herstellung in gelöster Form an. Zur Fixierung auf Trägermaterialien können direkt diese Lösungen ohne weitere Behandlung verwendet werden. Bevorzugt werden die Kolloide jedoch vor der Weiterverarbeitung in Form von Pulvern isoliert. Dies ist insbesondere bei Herstellung der Metall-Kolloide in organischen Lösungsmitteln vorteilhaft. Dadurch kann bei der nachfolgenden Trägerfixierung auf die Verwendung von organischen Lösungsmitteln verzichtet werden.

Die eingesetzten Träger sollten eine hohe spezifische Oberfläche aufweisen, um eine gute Dispersion der aktiven Katalysatormetalle zu ermöglichen. Vorteilhaft sind spezifische Oberflächen zwischen 1 und 2000 m$^2$/g.

Der Gehalt an Platingruppen-Metallen auf dem Träger sollte zwischen 0,05 und 30 Gew.-% betragen, bevorzugt zwischen 0,1 und 20 Gew.-%.

Die Katalysatoren können gegebenenfalls zusätzlich noch dotiert werden. Einfacher ist es jedoch, von Bi- oder Multimetall-Kolloiden auszugehen.

Als Katalysatorträger eignen sich verschiedene Materialien. Sie müssen allerdings die oben genannten Forderungen an ihre physikalischen Eigenschaften erfüllen und gegenüber den Reaktionsmedien, insbesondere gegenüber den freien Fettsäuren, beständig sein. Bei der bekannnten Fetthärtung haben sich Aktivkohle, Siliziumdioxid, Aluminiumoxid, Aluminium/Silizium-Mischoxide, Bariumsulfat, Titanoxid, mit Titanoxid beschichtete Glasperlen und Ionenaustauscherharze bewährt. Diese Trägermaterialien können auch beiden erfindungsgemäßen Verfahren eingesetzt werden. In sehr guter Weise werden die genannten Forderungen auch von Organosiloxanamin-Copolykondensaten oder von polymeren, sekundären und/oder tertiären Organosiloxanamin-Verbindungen oder von Organosiloxan-Polykondensaten erfüllt. Diese Trägermaterialien werden in den deutschen Patentschriften DE 38 00 563 C1, DE 38 00 564 C1, DE 39 25 359 C1 und DE 39 25 360 C1 bzw. der noch nicht veröffentlichten Patentanmeldung DE 42 25 978 beschrieben.

Die DE 4110705 und DE 4110706 beschreiben Katalysatoren auf Basis der zuvor genannten Trägermaterialien.

Überraschenderweise hat sich gezeigt, daß Edelmetall-Kolloidkatalysatoren in homogener oder geträgerter Form neben einer guten Aktivität auch sehr gute Selektivitätswerte, insbesondere eine sehr niedrige cis-trans Isomerisierung, aufweisen. Die selektive Hydrierung gelingt ohne den Einsatz von Lösungsmitteln. Die homogenen Kolloid-Katalysatoren können nach der Hydrierung durch den Einsatz geeigneter Aktivkohlen von dem Produkt abgetrennt werden. Pulverkatalysatoren werden auf bekannte Weise von dem Produkt abfiltriert. Beim kontinuierlichen Einsatz von Festbettkatalysatoren sowohl in Rohr- als auch Rohrbündelreaktoren entfällt eine Katalysatorabtrennung.

Das erfindungsgemäße Verfahren kann man bei einer Temperatur von Raumtemperatur bis 300 °C und einem Druck von Normaldruck bis 800 bar durchführen.

Beispiele

Es wird ein Sonnenblumenöl der folgenden Zusammensetzung an Fettsäuren eingesetzt:

$C_{18:2}$: 65,1 GC-Flächen-%

$C_{18:1}$: 21,0 GC-Flächen-%

$C_{18:0}$: 5,6 GC-Flächen-%

Rest: ungesättigte Fettsäuren mit unterschiedlicher Kettenlänge

Die Linolsäure (C$_{18:2}$) ist eine zweifach ungesättigte Fettsäure mit 18 Kohlenstoffatomen. Die Doppelbindungen der Linolsäure liegen in cis,cis-Konfiguration vor. Die Doppelbindungen dieser Fettsäure werden in einer Folgereaktion, also nacheinander hydriert. Im Reaktionsprodukt finden sich deshalb neben Resten der Linolsäure C$_{18:2}$ die einfach ungesättigte Ölsäure C$_{18:1}$ und die vollständig gesättigte Stearinsäure C$_{18:0}$. Die einfach ungesättigte Ölsäure kann in zwei isomeren Formen vorkommen, nämlich als cis-Form C$_{18:1}$(cis) und als trans-Form C$_{18:1}$(trans) (Elaidinsäure). Während der Hydrierung wird die Ölsäure teilweise zur Elaidinsäure (trans-Form) isomerisiert.

Zur Analyse der Reaktionsprodukte wird die Kapillar-Gaschromatographie eingesetzt.

Eine wichtige Kennzahl, die die Selektivität der Hydrierung von Fetten und Ölen beschreibt, ist die sogenannte Linoleat-Selektivität. Diese beschreibt den Grad der bevorzugten Hydrierung von doppelt ungesättigten Fettsäuren (Dien-Fettsäuren) gegenüber der Hydrierung von einfach ungesättigten Fettsäuren (Monoen-Fettsäuren). Die Linoleat-Selektivität ist definiert als das Verhältnis der Reaktionsgeschwindigkeits-Konstanten für die Umsetzung von Dien-Fettsäuren zu Monoen-Fettsäuren in Relation zu der Reaktionsgeschwindigkeits-Konstanten für die Umsetzung von Monoen-Fettsäuren zu vollständig gesättigten Fettsäuren (Journal of the American Oil Chemists' Society, Vol. 56, Januar 1979, 36 - 44).

Die Linoleat-Selektivität sollte so hoch wie möglich sein, damit die Bildung von unerwünschten gesättigten Fettsäuren unterdrückt wird.

Für eine bestimmte Jodzahl kann die Linoleat-Selektivität LS durch folgenden Ansatz berechnet werden:

$$LS = (C_{18:2}(t_0) - C_{18-2}(t_x))/(C_{18:0}(t_x) - C_{18:0}(t_0)$$

C$_{18:2}$(t$_0$): Konzentration der doppelt ungesättigten Fettsäuren zu Beginn der Reaktion

C$_{18-2}$(t$_x$): Konzentration der doppelt ungesättigten Fettsäuren zur Zeit t$_x$ der Reaktion

C$_{18:0}$(t$_0$): Konzentration der gesättigten Fettsäuren zu Beginn der Reaktion

C$_{18:0}$(t$_x$): Konzentration der gesättigten Fettsäuren zur Zeit t$_x$ der Reaktion

Beispiel 1

69,3 g trockne Aktivkohle mit einer mittleren Partikelgröße von 27,0 μm und einer BET-Oberfläche von 1100 m$^2$/g werden in 1050 ml vollentsalztem Wasser 15 min bei Raumtemperatur suspendiert. 0,7 g Platin in Form einer wäßrigen, mit 3-(N,N-Dimethyldodecylamino)-propansulfonat stabilisierten Pt-Kolloid-Lösung (hergestellt nach Beispiel 3 der DE 44 43 705 A1) werden auf 50 ml Volumen verdünnt. Die verdünnte Pt-Kolloid-Lösung wird binnen 5 min zur Trägersuspension getropft. Nach 1 h Rühren bei Raumtemperatur wird der Katalysator abfiltriert und gewaschen. Anschließend wird der Katalysator schonend im Vakuum bei 80°C getrocknet. Der Pt-Gehalt des Katalysators beträgt 1 Gew.-%.

Beispiel 2

19,4 g trockne Aktivkohle mit einer mittleren Partikelgröße von 27,0 μm und einer BET-Oberfläche von 1100 m$^2$/g werden in 300 ml vollentsalztem Wasser 15 min bei Raumtemperatur suspendiert. 0,6 g Platin in Form einer wäßrigen, mit 3-(N,N-Dimethyldodecylamino)-propansulfonat stabilisierten Pt-Kolloid-Lösung (hergestellt nach Beispiel 3 der DE 44 43 705 A1) werden auf 50 ml Volumen verdünnt. Die verdünnte Pt-Kolloid-Lösung wird binnen 5 min zur Trägersuspension getropft. Nach 1 h Rühren bei Raumtemperatur wird der Katalysator abfiltriert und gewaschen. Anschließend wird der Katalysator schonend im Vakuum bei 80°C getrocknet. Der Pt-Gehalt des Katalysators beträgt 3 Gew.-%.

Beispiel 3

9,7 g trockenes Calciumcarbonatpulver mit einer mittleren Partikelgröße von 5,3 μm und einer BET-Oberfläche von 8 m$^2$/g werden in 150 ml vollentsalztem Wasser 15 min bei Raumtemperatur suspendiert. 0,3 g Platin in Form eines festen, mit 3-(N,N-Dimethyldodecylamino)-propansulfonat stabilisierten Pt Kolloids (hergestellt nach Beispiel 3 der DE 44 43 705 A1) werden auf 50 ml Volumen verdünnt. Die verdünnte Pt-Kolloid-Lösung wird binnen 10 min zur Trägersuspension getropft und diese dann auf 80°C erwärmt. Nach 0,5 h Rühren bei 80°C wird der Katalysator abfiltriert und gewaschen. Anschließend wird der Katalysator schonend im Vakuum bei 80°C getrocknet. Der Pt-Gehalt des Katalysators beträgt 3 Gew.-%.

Beispiel 4

9,7 g trockenes Deloxan®-Pulver mit einer mittleren Partikelgröße von 100 µm und einer BET-Oberfläche von 550 m$^2$/g werden in 150 ml vollentsalztem Wasser 15 min bei Raumtemperatur suspendiert. 0,3 g Platin in Form eines festen, mit 3-(N,N-Dimethyldodecylamino)-propansulfonat stabilisierten Pt Kolloids (hergestellt nach Beispiel 3 der DB 44 43 705 A1) werden auf 50 ml Volumen verdünnt. Die verdünnte Pt-Kolloid-Lösung wird binnen 10 min zur Trägersuspension getropft und diese dann auf 80°C erwärmt. Nach 0,5 h Rühren bei 80°C wird die Suspension mit NaOH ( 10% ig ) auf pH 9,0 gestellt und nochmals 15 min. bei 80°C gerührt. Der Katalysator wird dann abfiltriert und gewaschen. Anschließend wird der Katalysator schonend im Vakuum bei 80°C getrocknet. Der Pt-Gehalt des Katalysators beträgt 3 Gew.-%.

Beispiel 5

9,7 g trockenes Aerosil-Sprühkorn mit einer mittleren Partikelgröße von 26 µm und einer BET-Oberfläche von 326 m$^2$/g werden in 150 ml vollentsalztem Wasser 15 min bei Raumtemperatur suspendiert. 0,3 g Platin in Form eines festen, mit 3-(N,N-Dimethyldodecylamino)-propansulfonat stabilisierten Pt-Kolloids (hergestellt nach Beispiel 3 der DE 44 43 705 A1) werden auf 50 ml Volumen verdünnt. Die verdünnte Pt-Kolloid-Lösung wird binnen 10 min zur Trägersuspension getropft. Nach 1 h Rühren bei Raumtemperatur wird die Suspension auf 50°C erhitzt. Nach 0,5 h Rühren bei 50°C wird der Katalysator abfiltriert und gewaschen. Anschließend wird der Katalysator schonend im Vakuum bei 80°C getrocknet. Der Pt-Gehalt des Katalysators beträgt 3 Gew.-%.

Beispiel 6

9,7 g trockenes Titandioxid-Sprühkorn mit einer mittleren Partikelgröße von 15 µm und einer BET-Oberflä-che von 51 m$^2$/g werden in 150 ml vollentsalztem Wasser 15 min bei Raumtemperatur suspendiert. 0,3 g Platin in Form eines festen, mit 3-(N,N-Dimethyldodecylamino)-propansulfonat stabilisierten Pt-Kolloids (hergestellt nach Beispiel 3 der DE 44 43 705 A1) werden auf 50 ml Volumen verdünnt. Die verdünnte Pt-Kolloid-Lösung wird binnen 10 min zur Trägersuspension getropft. Nach 1 h Rühren bei Raumtemperatur wird die Suspension auf 80°C erhitzt. Nach 0,5 h Rühren bei 80°C wird der Katalysator abfiltriert und gewaschen. Anschließend wird der Katalysator schonend im Vakuum bei 80°C getrocknet. Der Pt-Gehalt des Katalysators beträgt 3 Gew.-%.

Beispiel 7

Bimetallisches, mit Polyoxyethylenlaurylether stabilisiertes Pt-Ru-Kolloidpulver mit einem Gesamtgehalt an Edelmetallen von 15,6 Gew.-% (Pt-Gehalt 10,1 Gew.-%), (hergestellt analog der Beispiele 6 und 7 der DE 44 43 705 A1)

Beispiel 8

Rewoteric AM DML-stabilisiertes Pt-Kolloidpulver mit einem Pt-Gehalt von 49,5 Gew.-% (hergestellt nach Beispiel 20 aus Tabelle 6 der DB 44 43 705 A1)

Beispiel 9

Pt-Kolloid mit einem Pt-Gehalt von 61,6 Gew.-% (mit 3-(N,N-Dimethyldodecylammino)-propansulfonat stabilisiert, hergestellt nach Beispiel 3 der DE 44 43 705 A1).

Vergleichsbeispiel 1

47,5 g trocknes Aerosil-Sprühkorn mit einer mittleren Partikelgröße von 26 µm und einer BET-Oberfläche von 326 m$^2$/g werden in 400 ml vollentsalztem Wasser 15 min bei Raumtemperatur suspendiert und dann auf 90°C erhitzt. Der Suspension werden 10 ml Natriumformiatlösung 20%ig zugegeben. 2,5 g Platin in Form einer Platin-nitratlösung werden auf 75 ml Volumen verdünnt. Die verdünnte Platin-nitratlösung wird nun binnen 2 min zur Trägersuspension getropft. Nach 15 min. Rühren bei 90°C wird der Katalysator abfiltriert und gewaschen. Anschließend wird der Katalysator schonend im Vakuum bei 80°C getrocknet. Der Pt-Gehalt des Katalysators beträgt 5 Gew.-%.

Vergleichsbeispiel 2

49,5 g trocknes Titandioxid-Sprühkorn mit einer mittleren Partikelgröße von 15 μm und einer BET-Oberfläche von 51 m$^2$/g werden in 100 ml vollentsalztem Wasser 15 min bei Raumtemperatur suspendiert und dann mit 4 ml Natriumhydrogencarbonatlsg. 10%ig versetzt. Die Suspension wird auf 80°C erhitzt. 0,5 g Platin in Form einer Platin-nitratlösung werden auf 50 ml Volumen verdünnt. Die verdünnte Platin-nitratlösung wird nun binnen 10 min zur Trägersuspension getropft. Nach 15 min. Rühren bei 80°C wird mit 0,4 ml Hydrazinlösung 24%ig reduziert. Es wird nochmals 15 min. bei 80 °C gerührt. Der Katalysator wird dann abfiltriert und gewaschen, anschließend bei 110°C getrocknet. Der Pt-Gehalt des Katalysators beträgt 1 Gew.-%.

Anwendungsbeispiel:

Die in den Beispielen und Vergleichsbeispielen beschriebenen Katalysatoren werden bezüglich ihrer Aktivität und Selektivität bei der Hydrierung von Sonnenblumenöl getestet. Nach erfolgter Testung werden die Homogen-Katalysatoren durch Adsorption an geeigneten Aktivkohlen und anschließender Filtration vollständig vom hydrierten Produkt abgetrennt. Die Heterogen-Katalysatoren werden durch bekannte Filtration von dem hydrierten Produkt abgetrennt.

Zum Vergleich werden die kommerziellen Katalysatoren E 101 R/D 5% (5 Gew.-% Palladium auf Aktivkohle; VB3) und F 101 KR/D 5% (5 Gew.-% Platin auf Aktivkohle, VB4) der Degussa AG eingesetzt.

Als kommerzieller Nickel/SiO$_2$ Katalysator wird der Katalysator 9910 (Nickel-Gehalt 22 Gew.-%; VB 5) der Unichema vergleichend getestet.

Die Katalysatoren werden in einem 0,5-l-Hastelloy C4 Autoklaven der Fa. Medimex untersucht. In allen Experimenten werden 250 g eines Sonnenblumenöl in der zuvor beschriebenen Qualität eingesetzt. Der Nickel-Katalysator wird bei 120°C und einem Wasserstoffdruck von 5 bar sowie einer Ni-Konzentration von 0,0077 Gew.-% im Sonnenblumenöl getestet. Die homogenen Edelmetall-Kolloid- bzw. die geträgerten Edelmetall-Kolloid-Katalysatoren werden bei 90°C und einem Wasserstoffdruck von 7 bar eingesetzt. Je nach Aktivität der Edelmetall-Katalysatoren werden diese in einer Konzentration von 0,0025 bis 0,00025 Gew.-% im Sonnenblumenöl getestet. Es wird in allen Versuchen mit einer Rührgeschwindigkeit von 2000 UpM gerührt. Unter den zuvor genannten Reaktionsbedingungen finden die Reaktionen als kinetisch kontrollierte Reaktionen statt. Dadurch kann ausgeschlossen werden, daß die Testergebnisse und damit sowohl die Aktivität als auch die Selektivität der eingesetzten Katalysatoren durch Stofftransport-Effekte beeinflußt und überlagert wird. Während der Versuche werden in Abständen Proben genommen und diese auf ihre Jod-Zahl und nach vorheriger Umesterung mittels Kapillar-Gaschromatographie auf deren Zusammensetzung analysiert.

Die Ergebnisse der Hydriertests sind in der Tabelle 1 beschrieben. Die Anfangsaktivität pro Sekunde wird für eine Absenkung der Jodzahl von 130 auf 110 g Jod/(100 g Probe) berechnet. Dabei wird zusätzlich die Katalysator-Einwaage und der Druck, bei dem die Reaktion durchgeführt wird, berücksichtigt. Die Linoleat-Selektivität wird für die Produktzusammensetzung bei der Jod-Zahl 90 berechnet. Das trans/cis-Verhältnis der Monoenfettsäuren ($C_{18:1}$) wird für die Jod-Zahl 60 angegeben. Da sowohl eine hohe Linoleat-Selektivität als auch ein niedriger trans/cis-Wert anzustreben ist, wird zur Bewertung der Katalysatoren der Quotient aus Linoleat-Selektivität und trans/cis-Wert gebildet. Gute Katalysatoren zeichnen sich neben einer guten Aktivität durch eine hohe Linoleat-Selektivität, einen niedrigen trans/cis-Wert und einen hohen Wert für den Quotienten aus Linoleat-Selektivität und trans/cis-Wert aus.

Tabelle 1

| Katalysator [ - ] | Anfangsaktivität [JZ/(sec x bar x Gew.-% akt. Met.] | Linoleat-Selektivität LS bei der JZ 90 [ - ] | trans/cis-Wert für $C_{18:1}$ bei JZ 60 [ - ] | Quotient aus LS und trans/cis-Wert [ - ] |
|---|---|---|---|---|
| B1 | 3,2 | 3,9 | 0,25 | 15,5 |
| B2 | 2,0 | 4,2 | 0,16 | 26,3 |
| B3 | 3,9 | 3,9 | 0,21 | 18,6 |
| B4 | 0,3 | 3,9 | 0,17 | 22,9 |
| B5 | 4,6 | 3,4 | 0,24 | 14,2 |
| B6 | 3,3 | 3,2 | 0,24 | 13,3 |
| B7 | 0,6 | 3,7 | 0,22 | 16,8 |

Tabelle 1 (fortgesetzt)

| Katalysator [ - ] | Anfangsaktivität [JZ/(sec x bar x Gew.-% akt. Met.] | Linoleat-Selektivität LS bei der JZ 90 [ - ] | trans/cis-Wert für $C_{18:1}$ bei JZ 60 [ - ] | Quotient aus LS und trans/cis-Wert [ - ] |
|---|---|---|---|---|
| B8 | 7,5 | 5,7 | 0,18 | 31,7 |
| B9 | 1,36 | 3,9 | 0,22 | 17,7 |
| VB1 | 1,1 | 2,3 | 0,23 | 10,0 |
| VB2 | 2,4 | 2,9 | 0,25 | 11,6 |
| VB3 | 9,6 | 7,6 | 1,17 | 6,5 |
| VB4 | 11,6 | 3,1 | 0,30 | 10,3 |
| VB5 | 0,5 | 5,3 | 0,55 | 9,6 |

Kommerziell werden zur Zeit nahezu ausschließlich getragene Nickel-Katalysatoren nach Vergleichsbeispiel 5 eingesetzt. Die Katalysatoren B1 bis B8 des erfindungsgemäßen Verfahrens weisen zum Teil deutlich höhere Anfangsaktivitäten und einen höheren Quotienten aus Linoleat-Selektivität und trans/cis-Wert als der bekannte Nickel-Katalysator auf. Des weiteren weisen die Katalysatoren B1 bis B8 des erfindungsgemäßen Verfahrens höhere Linoleat-Selektivitäten und einen höheren Quotienten aus Linoleat-Selektivität und trans/cis-Wert als die Platin-Katalysatoren aus den Vergleichsbeispielen VB1, VB2 und VB4 auf. Der Palladium-Katalysator nach Vergleichsbeispiel VB3 zeigt die höchste Linoleat-Selektivität. Auf der anderen Seite bildet dieser Katalysator jedoch außerordentlich viele trans-isomere Fettsäuren, was durch einen hohen trans/cis-Wert gekennzeichnet ist. Damit ist dieser Katalysator schlechter zu bewerten als die Katalysatoren B1 bis B8 des erfindungsgemäßen Verfahrens.

In den Anwendungsbeispielen werden selektive Hydrierungen in Rührreaktoren beschrieben. Die in der EP 0 715 889 A2 beschriebenen Katalysatoren auf stückigen Trägermaterialien eignen sich prinzipiell auf für selektive oder vollständige Hydrierungen in Festbettreaktoren in Form von Flüssigphasen-, Rieselbetthydrierungen oder Hydrierungen in überkritischen Fluiden nach US 5,734,070.

**Patentansprüche**

1.    Verfahren zur selektiven katalytischen Hydrierung von Fettsäuren und/oder Fettsäure-Verbindungen, wie Fette, Öle und/oder Fettsäureester,
   **dadurch gekennzeichnet,**
   daß man als Katalysator Edelmetall-Kolloide verwendet.

2.    Verfahren nach Anspruch 1
   **dadurch gekennzeichnet,**
   daß man die Edelmetall-Kolloide in Form einer homogenen Katalyse einsetzt.

3.    Verfahren nach Anspruch 1,
   **dadurch gekennzeichnet,**
   daß man die Edelmetall-Kolloide in Form einer heterogenen Katalyse einsetzt.

4.    Verfahren nach den Ansprüchen 1 bis 3,
   **dadurch gekennzeichnet,**
   daß man tensidstabilisierte mono-, bi- oder multimetallische Kolloide von Metallen oder deren Lösungen als Katalysator einsetzt (Homogen-Katalysator) oder geträgerte Katalysatoren (Heterogen-Katalysator), die unter Verwendung von vorgeformten, tensidstabilisierten mono-, bi- oder multimetallischen Kolloiden von Metallen oder aus deren Lösungen hergestellt werden, einsetzt.

5.    Verfahren nach den Ansprüchen 1 bis 4,
   **dadurch gekennzeichnet,**
   daß man mono-, bi- oder multimetallische Kolloide von Metallen aus den Gruppen VIII und IB des Periodensystems einsetzt.

6.    Verfahren nach den Ansprüchen 1 bis 5,

**dadurch gekennzeichnet,**
daß man als Träger für die zur Hydrierung eingesetzten Katalysatoren Kohlenstoffträger, Oxide eines oder mehrerer Metalle der Gruppen IIA bis VA sowie IB bis VIIB und VIII des Periodensystems, Carbonate, Sulfate, Zeolithe, organofunktionelle Polysiloxane oder Ionenaustauscherharze in Form von Pulvern oder geformten Körpern verwendet.

7. Verfahren nach Ansprüchen 1 bis 6,
**dadurch gekennzeichnet,**
daß man als Homogen-Katalysator mono-, bi- oder multimetallische Kolloide einsetzt, wobei zu deren Herstellung die entsprechenden Metallsalze in Gegenwart von stark hydrophilen Tensiden aus der Reihe der amphiphilen Betaine, kationische Tenside, Fettalkohol-Polyglykolether, Polyoxyethylen-Kohlenhydrat-Fettalkylester und/oder anionische Tenside und/oder amphiphile Zuckertenside in Tetrahydrofuran, Alkoholen oder direkt in Wasser mit chemischen Reduktionsmitteln, wie Hydriden, Wasserstoff oder Alkaliformiat, zwischen 0 und 100°C umgesetzt und anschließend isoliert werden.

8. Verfahren nach den Ansprüchen 1 bis 7,
**dadurch gekennzeichnet,**
daß man Trägerkatalysatoren einsetzt, die durch Einsatz mono-, bi- oder multimetallischer Kolloide hergestellt werden, wobei zu deren Herstellung die entsprechenden Metallsalze in Gegenwart von stark hydrophilen Tensiden aus der Reihe der amphiphilen Betaine, kationische Tenside, Fettalkohol-Polyglykolether, Polyoxyethylen-Kohlenhydrat-Fettalkylester und/oder anionische Tenside und/oder amphiphile Zuckertenside in Tetrahydrofuran, Alkoholen oder direkt in Wasser mit chemischen Reduktionsmitteln, wie Hydriden, Wasserstoff oder Alkaliformiat, zwischen 0 und 100°C umgesetzt und anschließend isoliert werden.

9. Verfahren nach den Ansprüchen 1 bis 8,
**dadurch gekennzeichnet,**
daß man als Homogen-Katalysator mono-, bi- oder multimetallische Kolloide einsetzt, die durch Einsatz mono-, bi- oder multimetallischer Kolloide hergestellt werden, die als hochdisperse, mikrokristalline Metalle oder Legierungen in Form von Pulvern oder Kolloiden durch Reduktion ihrer Metallsalze mit Metallhydriden der 1. und 2. Hauptgruppe des Periodensystems (z.B. Tetraalkylammoniumtriorganohydroboraten) ohne Anwendung von Wasserstoff in Gegenwart stabilisierender Komplexbildner (z.B. Tetraalkylammoniumsalzen) gemäß der EP 423 627 B1 nach Abtrennung (z.B. Filtration) erhalten werden können und sich in inerten, organischen Lösungsmitteln, wie Tetrahydrofuran, Diglyme oder Kohlenwasserstoffen, redispergieren lassen.

10. Verfahren nach den Ansprüchen 1 bis 9,
**dadurch gekennzeichnet,**
daß man Trägerkatalysatoren einsetzt, die durch Einsatz mono-, bi- oder multimetallischer Kolloide hergestellt werden, die als hochdisperse, mikrokristalline Metalle oder Legierungen in Form von Pulvern oder Kolloiden durch Reduktion ihrer Metallsalze mit Metallhydriden der 1. und 2. Hauptgruppe des Periodensystems (z.B. Tetraalkylammoniumtriorganohydroboraten) ohne Anwendung von Wasserstoff in Gegenwart stabilisierender Komplexbildner (z.B. Tetraalylammoniumsalzen) gemäß der EP 423 627 B1 nach Abtrennung (z.B. Filtration) erhalten werden können und sich in inerten, organischen Lösungsmitteln, wie Tetrahydrofuran, Diglyme oder Kohlenwasserstoffen, redispergieren lassen.

11. Verfahren nach den Ansprüchen 1 bis 10,
**dadurch gekennzeichnet,**
daß man die Hydrierung mit Homogen-Katalysatoren oder mit pulverförmigen Katalysatoren in Rührreaktoren oder in Schleifenreaktoren durchführt.

12. Verfahren nach den Ansprüchen 1 bis 11,
**dadurch gekennzeichnet,**
daß man die Hydrierung mit stückigen Trägerkatalysatoren in Festbettreaktoren oder Rohrbündelreaktoren durchführt.

13. Verfahren nach den Ansprüchen 1 bis 12,
**dadurch gekennzeichnet,**
daß man die Hydrierung bei einem Gesamtdruck von bis zu 800 bar durchführt.

**14.** Verfahren nach den Ansprüchen 1 bis 7,
   **dadurch gekennzeichnet,**
   daß man die Hydrierung bei einem Wasserstoffdruck bzw. Wasserstoffpartialdruck von bis zu 800 bar durchführt.